# EUROPÄISCHE PATENTSCHRIFT

(11) **EP 2 347 968 B1**
(45) Veröffentlichungstag und Bekanntmachung des Hinweises auf die Patenterteilung: **12.12.2012**
(21) Anmeldenummer: 11150264.7
(22) Anmeldetag: 05.01.2011
(51) Int. Cl.: B65D 33/02

(54) **Kunststofffolienbeutel mit Relief**
Plastic film bag with relief
Sac plastique doté d'un relief

(30) Priorität: 22.01.2010 DE 202010001261 U
(43) Veröffentlichungstag der Anmeldung: 27.07.2011
(73) Patentinhaber: Mondi AG, 1032 Wien (AT)
(72) Erfinder: Watterott, Oswald, D-53562 Sankt Katharinen (DE)
(74) Vertreter: Schneider, Michael

(56) Entgegenhaltungen:
- EP-A1- 1 785 363
- EP-A1- 2 014 565
- EP-A1- 2 093 152
- WO-A2-2006/132919

## Beschreibung

Die Erfindung betrifft ein Verfahren zur Herstellung einer Kunststofffolie für eine Beutelwand eines Beutels und ein Verfahren zur Herstellung eines Beutels aus einer Kunststofffolie.

### HINTERGRUND

Bei dem Beutel der eingangs angeführten Gattung handelt es sich um einen sogenannten Folienbeutel. Auf die Kunststofffolie wird mit in der Verpackungsindustrie üblichen Druckverfahren an ihrer Außenseite ein Druckbild aufgebracht, um den Beutel bzw. seinen Inhalt für einen Endbenutzer einfach identifizierbar zu machen.

Soll dieser Beutel jedoch auf opto-elektronische Weise - also maschinell - erkannt bzw. identifiziert werden, so treten mitunter erhebliche Probleme auf, da die üblicherweise glänzende Oberfläche der Folie Licht relativ intensiv reflektiert. Mitunter treten auch ungünstige Lichtverhältnisse auf, wie beispielsweise gleißendes Sonnenlicht, was die maschinelle Identifizierung bzw. automatische Erkennung des Beutels erheblich erschwert oder mitunter unmöglich macht, weil es zu einer Überbelichtung eines opto-elektronischen Sensors kommt. Das durch die glänzende Oberfläche des Beutels begünstigte üblicherweise ausgezeichnetes Reflektionsvermögen und die mitunter ungünstigen Lichtverhältnisse stellen für eine opto-elektronische Erkennung bzw. Identifizierung ein erhebliches Problem dar. Auch in dem Druckbild enthaltene Farbunterschiede erleichtern die Erkennung des Beutels meist nicht.

Im Kontext der Probleme der maschinellen Erkennung von Farbunterschieden auf einer Fläche ist beispielsweise auf die WO 2006/081466 A2 zu verweisen. Dort wird das Erkennen eines Strichcodes mit abwechselnd weißen und schwarzen Strichen auf einer stark reflektierenden Oberfläche einer Verpackung thematisiert. Zur Lösung der reflexionsbedingten Erkennungsprobleme ist bei dem dort beschriebenen opto-elektronischen Erkennungsgerät ein relativ hoher technischer Aufwand nötig.

Oft werden Beutel auch durch RFID-Chips identifiziert. Die Verarbeitung solcher RFID-Chips bei der Beutelherstellung ist jedoch kompliziert, die RFID-Chips sind relativ teuer und die Erkennung der Beutel funktioniert nur auf relativ kurze Distanzen mit nicht unerheblichen Investitionen in Erkennungssysteme.

EP2 014 565 A1 offenbart ein Verfahren und eine Vorrichtung zum Herstellen eines Beutels, der eine Wand mit einem Relief aufweist.

WO 2006/132919 A2 betrifft das Spezialgebiet der Herstellung holographischer Oberflächenreliefs.

EP 2 093 152 A1 offenbart einen dreidimensionalen Behälter aufweisend Papiermaterial mit einem Kunststoffanteil, wobei zumindest ein Teil seiner Seitenwand eine dreidimensionale plastische Deformation aufweist.

EP 1 785 363 A1 offenbart einen Beutel aus Kunststoffmaterial, der in seiner Wand ein Relief aufweist.

### ZUSAMMENFASSUNG DER ERFINDUNG

Es ist daher eine Aufgabe der Erfindung, einen Beutel zu schaffen, der mit relativ niedrigem technischen Aufwand im Bereich eines Erkennungsgerätes sowie bei dem Beutel selbst auf zuverlässige Weise maschinell bzw. opto-elektronisch identifiziert bzw. erkannt werden kann.

Die Aufgabe wird durch ein Verfahren zur Herstellung einer Kunststofffolie für eine Beutelwand eines Beutels gemäß Anspruch 1 gelöst. Erfindungsgemäß weist das Verfahren die nachfolgend angeführten Verfahrensschritte auf, nämlich Zuführen der Kunststofffolie zu einer Prägestation, wobei die Prägestation eine Matrize und eine Patrize aufweist, und Zuführen eines Materials auf einer Trägerbahn zu der Prägestation, wobei das Material auf jener der Kunststofffolie zugewandten Seite der Trägerbahn angebracht ist und an jener Seite der Kunststofffolie befördert wird, die bei dem fertigen Beutel nach außen weist, und Zusammenpressen der Kunststofffolie und der Trägerbahn zwischen der Matrize und der Patrize zwecks Erzeugung eines Reliefs.

Die Aufgabe wird weiterhin durch ein Verfahren zur Herstellung eines Beutels aus einer Kunststofffolie gemäß Anspruch 5 gelöst. Erfindungsgemäß wird zunächst in einer ebenen Folienbahn in einer Prägestation mit Hilfe einer Matrize und einer Patrize ein Relief in vordefinierten Abständen entlang der Folienbahn erzeugt, aufweisend ein - Zuführen eines Materials auf einer Trägerbahn zu der Prägestation, wobei das Material auf jener der Kunststofffolie zugewandten Seite der Trägerbahn angebracht ist und an jener Seite der Kunststofffolie befördert wird, die bei dem fertigen Beutel nach außen weist, und - Zusammenpressen der Kunststofffolie und der Trägerbahn zwischen der Matrize und der Patrize zwecks Erzeugung eines Reliefs. Nachfolgend an das Erzeugen des Reliefs in der ebenen Folienbahn wird die Folienbahn zu einem Beutel derart verarbeitet, dass eine Beutelwand des Beutels das Relief aufweist.

Die Wand des Beutels kann aus einem einteiligen Bogen der Kunststofffolie gefertigt sein, der zusammengefaltet und an gegenüberliegenden Kanten des Bogens verklebt oder versiegelt wird. Die Wand ist dann aus einem einzigen Materialstreifen der Kunststofffolie gefertigt und weist gegebenenfalls Faltlinien oder weitere Siegellinien auf, um einzelne Wandbereiche voneinander zu trennen. Es können jedoch auch einzelne aus der Kunststofffolie gefertigte Wandelemente die Wand des Beutels bilden. Dazu werden einzelne Wandelemente an ihren Kanten mit Kanten von benachbarten Wandelementen verklebt oder versiegelt, um in ihrer Gesamtheit die Wand des Beutels zu realisieren.

Ein offenbarter Beutel weist ein Relief auf, das in die Kunststofffolie eingeprägt ist. Ein Relief ist ein über eine Fläche - im vorliegenden Fall die das Relief umgebende Oberfläche der Kunststofffolie - erhaben hervortretendes Bildwerk. Damit unterscheidet sich das Relief grundsätzlich von einer flächigen Grobstrukturierung der Oberfläche, die sich im Wesentlichen über die gesamte Fläche der Kunststofffolie erstreckt und vorwiegend dazu dient, die Reibung zwischen aneinander anliegenden Beuteln zu erhöhen.

Das Relief kann einstufig oder mehrstufig ausgebildet sein. Es kann ein einzelnes Relief oder eine Gruppe von Reliefs vorgesehen sein. Die Reliefs können eng aneinander anliegend angeordnet sein und folglich einen Verbund bilden. Sie können aber auch mit entsprechendem Abstand voneinander angeordnet sein und somit als einzelne Elemente für die opto-elektronische Erkennung in Erscheinung treten. Wenn mehrere Reliefs existieren, können diese auf die einzelnen Wandbereiche oder Wandelemente verteilt sein.

Das Relief wird in der Kunststofffolie noch vor ihrer Verarbeitung zu einem Beutel in einer Prägestation eingeprägt. Zu diesem Zweck wird die Kunststofffolie zwischen einer Matrize und einer Patrize positioniert und die Matrize und die Patrize zusammengepresst. Die Matrize und die Patrize weisen die Form des Reliefs auf. Zwecks Erzeugung des Reliefs kann jedoch auch nur die Matrize die Form des Reliefs oder eine dazu komplementäre Form aufweisen und die Patrize eben ausgebildet sein.

Abgesehen von den Erhebungen und Vertiefungen entsprechend dem zu erzeugenden Relief, weist das jeweilige Prägewerkzeug grundsätzlich eine flache Ausbildung auf. Es wird gemäß dieser Ausbildung als Flachprägewerkzeug bezeichnet.

Zudem ist das Erzeugen des Reliefs auf bzw. in der flach aufgelegten Kunststofffolie vor der Herstellung der Beutelstruktur erheblich effizienter zu bewerkstelligen, als dies der Fall wäre, wenn das Relief an einer teilfertigen oder vollständig fertig gestellten Struktur des Beutels erzeugt würde. Dies ermöglicht auch die Verwendung von besagten Flachprägewerkzeugen, was zudem eine erhebliche Kostenersparnis im Vergleich zu einer Verwendung von rotativen Werkzeugen nach sich zieht.

Nach Herstellung des Reliefs kann die Kunststofffolie wieder aufgerollt und gelagert werden. Sie kann aber auch direkt zu einer Beutelherstellungsstation weiter befördert werden, wo sie zu einem (meist einseitig offenen) Beutel verarbeitet wird.

Im Übergang zwischen einem nicht geprägten Bereich der Kunststofffolie, die das Relief umgibt, und den in die Kunststofffolie eingeprägten Erhebungen, die das Relief bilden, liegt ein Übergangsbereich. Der Übergangsbereich bildet die Kontur bzw. den Rand des Reliefs. In diesem Übergangsbereich verändert die Kunststofffolie ihre Orientierung, was zu einem veränderten Reflexions- bzw. Absorptionsverhalten für Licht gegenüber den Bereichen der Kunststofffolie außerhalb der Kontur führt. Die Kontur des Reliefs bildet also eine Diskontinuität im optischen Verhalten der Folie. Die Diskontinuität erleichtert die opto-elektronische Erkennung der Kontur erheblich. In den umliegenden Bereichen um die Kontur, also dort wo die Kunststofffolie nach wie vor meist eben verläuft, ändert sich an dem optischen Verhalten der Kunststofffolie praktisch nichts.

Die Kunststofffolie kann einschichtig oder mehrschichtig aufgebaut sein. Bei einem mehrschichtigen Aufbau kann eine äußere Schicht beispielsweise aus Polyester, wie orientiertes PET, amorphes PET, Polyolefine wie Polypropylen, Cast-PP, geblasenen, gereckten, biaxial gestreckte PP-Folien oder Polyethylen, Polystyrol, Polycarbonat, Zellgas, Polyamid, Polyvinylchlorid oder deren Copolymere bestehen. Es können co-extrudierte oder laminierte Kunststoffverbundfolien verwendet werden. Die innere Schicht besteht vorzugsweise aus einem siegelfähigen Medium, wie beispielsweise aus Kunststofffolie, aus Polyolefinen, wie Polyethylen, aus EVOH, EVA, und/oder dessen Copolymeren oder Terpolymeren, Polysterol, Polycarbonat, Zellgas, Polyamid, Polyvinylchlorid usw. Die innere Schicht kann aber auch durch Extrusionsbeschichten oder Lackierung der äußeren Folie mit einem der genannten Kunststoffe gebildet werden.

Eine solche Folie wird meist auf einer "Form Fill and Seal Maschine" verarbeitet. Dort wird zunächst eine Folie zu einem einseitig offenen Beutel verarbeitet, dann mit Füllgut gefüllt und anschließend die noch offene Seite (meist die obere, mitunter auch die untere Seite) des Beutels verschlossen. Die Verwendung eines Reliefs zur automatischen Erkennung hat gegenüber anderen Methoden oder Mitteln den Vorteil, dass die maschinell erkannte Information relativ einfach auch durch einen Menschen verifiziert werden kann. Es können also Fehlerkennungen vermieden bzw. leichter festgestellt werden und Stichproben betreffend die Erkennungsqualität sehr rasch und praktisch ohne hohen technischen Aufwand und daher fast überall und durch jede Person durchgeführt werden.

Gemäß einem Aspekt der Erfindung weist die Beutelwand einen Vorder- und Rückwandbereich auf und das Relief befindet sich in dem Vorder- und/oder Rückwandbereich. Ein Relief auf der Vorder- und/oder Rückwand des Beutels bringt den Vorteil mit sich, dass während der Verarbeitung der Folie das Relief praktisch immer sichtbar ist und daher in jedem Verarbeitungsschritt des Beutels maschinell erkannt werden kann. Dies gilt sogar solange der Beutel leer im vorgefertigten Zustand zu einer Abfüllstation transportiert wird. Voraussetzung dafür ist natürlich, dass die Vorder- und/oder Rückwand nicht durch andere Gegenstände abgedeckt ist.

Gemäß einem weiteren Aspekt der Erfindung weist die Beutelwand zumindest einen Seitenwandbereich auf und das Relief befindet sich in dem Seitenwandbereich. Der Beutel kann einen einzigen Seitenwandbereich aufweisen. Zusammen mit einem Vorder- und Rückwandbereich ergibt sich dann ein Dreieckbeutel. Bevorzugt sind jedoch zwei Seitenwandbereiche vorgesehen, nämlich ein linker und ein rechter Seitenwandbereich. Die Seitenwandbereiche sind meist durch eine Seitenfalte in zwei Teile getrennt und zwischen dem Vorder- und Rückwandbereich eingeschlagen. Ein so geformter Seitenwandbereich wird in seiner Gesamtheit im Fachjargon auch oft als die "Seitenfalte" bezeichnet. Die Seitenwandbereiche können jedoch auch ohne Seitenfalte ausgebildet sein.

Wird der noch leere vorgefertigte Beutel zu einer Abfüllstation hin transportiert, sind diese Seitenwandbereiche üblicherweise nicht oder beinahe nicht sichtbar. Erst wenn der Beutel gefüllt wird, wird auch der Seitenwandbereich vollständig sichtbar, weil sich der Beutel aufbläht. Das Relief auf dem Seitenwandbereich wird erst dann gut sichtbar.

Die gefüllten Beutel werden üblicherweise nebeneinander stehend oder aufeinander liegend gestapelt transportiert. In dieser Konfiguration liegt immer ein Vorderwandbereich eines Beutels an einem Rückwandbereich eines anderen Beutels an. Querab zu den Vorder- und Rückwandbereichen sind dann nur die Seitenwandbereiche sichtbar. Das Anbringen des Reliefs in dem Seitenwandbereich erleichtert also das automatische Erkennen und Identifizieren der Beutel im eng aneinander geschlichteten Zustand. Selbst wenn in einem Stapel Beutel mit unterschiedlichem Füllgut gestapelt sind, stellt dies kein Problem dar, weil ja das Relief in dem Seitenwandbereich zu sehen ist. Über das Relief kann der Inhalt der Beutel problemlos maschinell identifiziert werden.

Gemäß einer Ausbildungsform ist das Relief mit einer Materialschicht beschichtet. Die Materialschicht weist ein von dem optischen Verhalten der Kunststofffolie abweichendes Reflexions- bzw. Absorptionsverhalten oder ggf. Polarisationsverhalten für Licht auf. Die Schicht, mit der das Relief beschichtet ist, kann beispielsweise eine Metallfolie wie z.B. eine Gold- oder Silberfolie oder ein Sicherheitssiegel bzw. ein Hologramm sein. Die Beschichtung des Reliefs mit besagten Materialien hat den Vorteil, dass die Erkennung nicht nur durch die Kontur des Reliefs, sondern auch durch seine flächige Ausbildung erleichtert ist. Es stehen nun großflächige Bereiche für die opto-elektronische Erkennung bzw. Identifizierung des Beutels zur Verfügung. Beschichtungen mit Metallfolien erhöhen das Reflexionsvermögen des Reliefs gegenüber der umliegenden Folienoberfläche. Dies erleichtert die maschinelle Erkennbarkeit bei Dämmerungslicht oder erhöhter Abschattung. Werden demgegenüber Beschichtungen verwendet, die eine erhöhte Absorption von Licht verglichen mit der umliegenden Folienoberfläche bewirken, so erhöht dies die maschinelle Erkennbarkeit bei sehr hellen Lichtverhältnissen, weil die beschichteten Bereiche Licht weniger stark reflektieren. Um allen Situationen gerecht zu werden, können auch Bereiche in dem Relief mit erhöhtem Reflexionsverhalten und solche mit niedrigerem Reflexionsverhalten vorliegen. Der Informationsgehalt dieser Bereiche ist dann bevorzugt identisch, wobei die maschinelle Erkennbarkeit je nach Lichtsituation für den einen oder den anderen Bereich begünstigt ist.

Das Aufbringen des Materials kann dabei wie folgt erfolgen. Es wird einerseits die Kunststofffolie bahnartig zu einer Prägestation zugeführt. Die Prägestation weist zum Beispiel oberhalb der Kunststofffolienbahn eine Matrize und unterhalb der Kunststofffolienbahn eine Patrize auf. Zugleich wird synchron zu der Kunststofffolie das aufzuprägende Material auf einer Trägerbahn zu der Prägestation zugeführt, wobei das Material auf jener der Kunststofffolie zugewandten Seite der Trägerbahn angebracht ist. Die Trägerbahn mit dem darauf befindlichen Material wird also zwischen der Kunststofffolie und der Matrize an jener Seite der Kunststofffolie befördert, die bei dem fertigen Beutel nach außen weist. In einem nächsten Arbeitsschritt erfolgt ein Zusammenpressen der Kunststofffolie mit der Trägerbahn zwischen der Matrize und der Patrize, so dass das auf der Trägerbahn befindliche Material auf die Kunststofffolie genau im Bereich des Reliefs übertragen wird. Die genaue Positionierung des Materials auf der Kunststofffolie wird durch eine exakte Anpassung der Dimensionierung der Patrize und der Matrize erzielt. In einem weiteren Schritt werden die Matrize und die Patrize wieder voneinander entfernt. Die Kunststofffolie mit dem eingeprägten Relief und dem auf dem Relief aufgepressten Material sowie die Trägerbahn werden weiter bewegt.

Andererseits kann auch ein Relief durch die Materialschicht gebildet sein. Um diese Ausbildung zu realisieren kommt eine Matrize zum Einsatz, welche die Form des Reliefs oder eine dazu komplementäre Form aufweist. Die Patrize kann bevorzugt - muss jedoch nicht - in beiden Fällen eben ausgebildet sein. Bei dem Zusammenpressen der Matrize und der Patrize wird dann an den Erhebungen der Matrize, die näher an der Patrize gelegen sind, als die dazwischen auf der Matrize ausgebildeten Einbuchtungen, ein Materialtransfer von der Trägerbahn auf die Kunststofffolie erzeugt. Es werden also Schichtteile bzw. -bereiche von dem auf der Trägerfolie bereitgestellten Material dort abgelöst, wo diese durch die Erhebungen in der Matrize auf die Kunststofffolie gedrückt werden. Die Höhe des so erhaltenen Reliefs lässt sich durch den Anpressdruck zwischen Matrize und Patrize und / oder durch die Dicke des Materials auf der Trägerbahn und / oder durch die Beschaffenheit der Kunststofffolie selbst und / oder auch durch Temperatureinwirkung beeinflussen.

Gemäß einem weiteren Aspekt der Erfindung erhebt sich das Relief zum Inneren des Beutels oder zum Äußeren des Beutels hin aus der Kunststofffolie. Wenn sich das Relief zum Inneren des Beutels hin erhebt, ist bildlich gesprochen von außerhalb des Beutels betrachtet von dem Relief sein Negativ zu sehen. Die Beschichtung des Reliefs erfolgt dann in von außerhalb sichtbaren Vertiefungen des Reliefs. Dadurch kann ein ungewünschter Abrieb des Materials bei der Benutzung oder dem Transport des Beutels vermieden oder verzögert werden.

Um den Transfer von dem Material auf die Kunststofffolie präziser steuern zu können, kommt eine Trägerbahn zum Einsatz, bei der zwischen der Trägerbahn und dem auf der Trägerbahn zugeführten Material ein Schmelzkleber angeordnet ist. Der Schmelzkleber ist bevorzugt transparent, damit die auf der Kunststofffolie übertragene Materialschicht nicht durch Kleber optisch verunreinigt erscheint und ihre optischen Eigenschaften voll entfalten kann. Gemäß dem bevorzugten Verfahren zur Herstellung der Kunststofffolie kommt eine Prägestation zum Einsatz, die eine Heizeinrichtung aufweist. Die Heizeinrichtung kann mit der Rückseite der Matrize vollflächig oder bereichsweise verbunden sein und dient dazu, die Matrize zu erwärmen und so den punktgenauen bzw. bereichsgenauen Transfer des Materials auf die Kunststofffolie zu begünstigen. Bei dem Herstellungsverfahren der Kunststofffolie wird bei dem Verfahrensschritt des Zusammenpressens der Matrize und der Patrize der Schmelzkleber durch Wärmeeinwirkung - erzeugt durch die Heizeinrichtung - geschmolzen und das auf der Trägerbahn befindliche Material auf die Kunststofffolie im Bereich des zu erzeugenden bzw. erzeugten Reliefs übertragen.

Es wird damit das Erscheinungsbild des Reliefs verbessert, weil die Konturen des Reliefs wesentlich präziser herstellbar sind, also dies ohne die Heizeinrichtung oder ohne den Schmelzkleber zwischen der Trägerbahn und dem Material der Fall wäre.

Gemäß einem Aspekt der Erfindung - betreffend das Verfahren zur Herstellung eines Beutels - umfasst das nachfolgend an das Herstellen der das Relief aufweisenden Kunststofffolie erfolgende Verarbeiten der ebenen Folienbahn ein Segmentieren, also ein Zerscheiden in Segmente der Kunststofffolie in Foliensegmente. Durch die Segmentierung erhaltene individuelle Foliensegmente der Folienbahn werden ggf. durch Falten und /oder Versiegeln miteinander oder an ihren Faltbereichen zu dem Beutel geformt bzw. zusammengefügt. Das Zusammenfügen kann durch Klebstoff (Kaltverbindung) oder Schweißverfahren (Temperatur- oder Ultraschalltechnik) erfolgen.

Gemäß einem weiteren Aspekt der Erfindung - betreffend das Verfahren zur Herstellung eines Beutels - umfasst das Verfahren nachfolgend an das Herstellen der das Relief aufweisenden Kunststofffolie ein Falten und Versiegeln entlang einer Längsnaht zwecks Bildung einer Schlauchform. Die Schlauchform, die durch Verkleben oder Versiegeln entlang einer Längsnaht des Schlauches erzeugt wurde, wird nachfolgend in Schlauchsegmente segmentiert und dann erste zu dem fertigen Beutel durch ggf. weitere Formung und Versiegelung am Kopf- bzw. Fußende weiterverarbeitet.

Bei den vorstehend angesprochenen Aspekten der Herstellung des Beutels geht der Vorteil einher, dass die Kunststofffolie mit Hilfe von Faltungs- und Versiegelungseinrichtungen genauso verarbeitet werden kann, wie eine Folie ohne Relief. Es sind also an den bestehenden Komponenten einer Verpackungsanlage bzw. einer Beutelherstellungsanlage keine Änderungen mehr nötig, um ein Relief in der Wand des Beutels zu erzeugen, da dieses bereist in der Kunststofffolie existiert, die der Verpackungsanlage bzw. der Beutelherstellungsanlage zugeführt wird.

In einer bevorzugten Ausbildungsform des Beutels sind die Wandbereiche durch Siegelnähte, insbesondere Längssiegelnähte, begrenzt. Der Beutel kann auch einen Wiederverschluss aufweisen. Die Siegelnähte erhöhen die Stabilität der Beutelstruktur. Der Wiederverschluss erlaubt eine dosierte Entnahme des Füllgutes und ein verschlossenes Lagern des in dem Beutel verbleibenden Füllgutes. Als Wiederverschluss können z.B. "Slider" oder "Zipper" oder "Peal-Seal-Folien" zum Einsatz kommen. Diese Elemente können direkt oder indirekt mit der Innenseite der Kunststofffolie verbunden sein. Der Wiederverschluss kann an dem Vorder- oder Hinterwandbereich oder an dem Seitenwandbereich vorgesehen sein. Der Beutel kann auch einen Griff (Tragegriff) aufweisen, der in die Beutelwand integriert, auf sie aufgeklebt oder mit ihr versiegelt sein kann.

### FIGURENKURZBESCHREIBUNG

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugsziffern versehen. Es zeigen auf schematische Weise:
- Fig. 1: einen Beutel mit einem Relief,
- Fig. 2: einen Schnitt durch das Relief gemäß der Fig. 1,
- Fig. 3: einen Schnitt durch ein Relief mit einer Beschichtung mit einem Material gemäß einem exemplarischen Ausführungsbeispiel der Erfindung,
- Fig. 4: eine Herstellungsvorrichtung für eine geprägte Kunststofffolie gemäß einem exemplarischen Ausführungsbeispiel der Erfindung,
- Fig. 5: ein Detail einer Herstellungsvorrichtung gemäß einem weiteren exemplarischen Ausführungsbeispiel der Erfindung und
- Fig. 6: ein Detail einer Herstellungsvorrichtung gemäß einem weiteren exemplarischen Ausführungsbeispiel der Erfindung.

### BESCHREIBUNG DER AUSFÜHRUNGSBEISPIELE

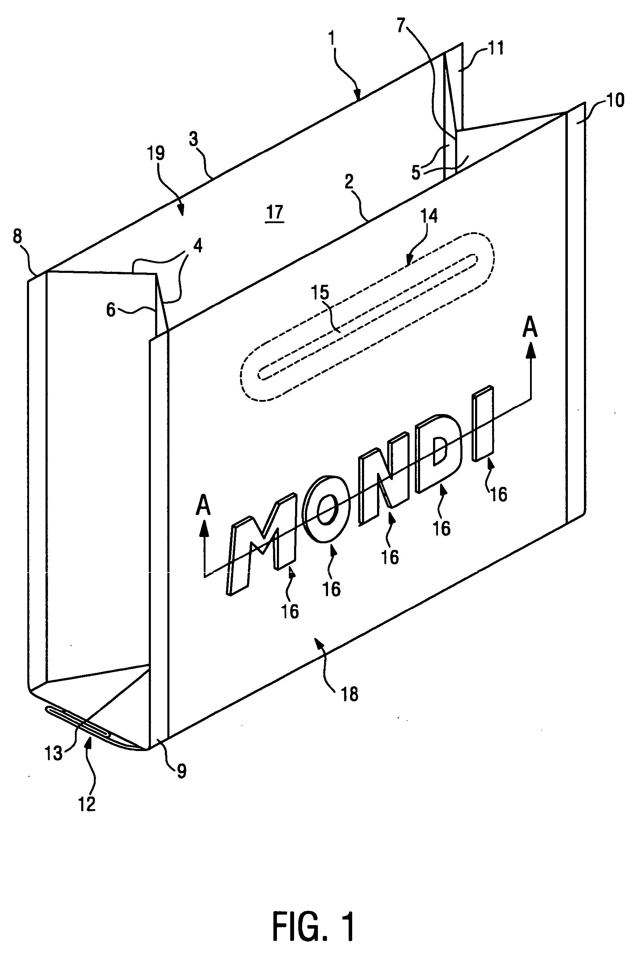

In der Fig. 1 ist ein Beutel 1 dargestellt, der aus einer Kunststofffolie 17 gefertigt ist. Die Kunststofffolie 17 hat eine Außenseite 18 und eine siegelfähige Innenseite 19. Die Beutelwand hat einen Vorderwandbereich 2, und einen Rückwandbereich 3. Die Beutelwand 1 weist zudem einen ersten Seitenwandbereich 4 auf, der durch eine erste Seitenfalte 6 geteilt ist. Die Beutelwand weist einen zweiten Seitenwandbereich 5 auf, der durch eine zweite Seitenfalte 7 geteilt ist.

Der Beutel 1 ist durch Falten der Kunststofffolie 17 hergestellt, wobei zwei gegenüberliegende Enden eines Streifens der Kunststofffolie 17 aneinander gelegt werden und mit einer ersten Längssiegelnaht 8 versiegelt werden. Bei dem Versiegelungsprozess wirkt in einem durch ein Siegelwerkzeug (nicht dargestellt) räumlich begrenzten Bereich Hitze auf die Kunststofffolie 17 ein und die in dem Siegelwerkzeug aneinander gepressten Flächen der siegelfähigen Innenseite 19 der Kunststofffolie 17 verschmelzen miteinander. Der Beutel 1 weist weiters eine zweite Längssiegelnaht 9, eine dritte Längssiegelnaht 10 und eine vierte Längssiegelnaht 11 auf. Die drei Längssiegelnähte 9 bis 11 sind durch ein Versiegeln der Innenseite 19 der Kunststofffolie 17 in jenen Bereichen erzeugt, in denen sie gefaltet wurde. Eine derart gebildete schlauchförmige Struktur des Beutels 1 wird üblicherweise im Bodenbereich 12 verschlossen. Zu diesem Zweck werden einander gegenüberliegende Innenseiten 19 der Kunststofffolie 17 mit einer Quersiegelnaht 13 versiegelt und die Kunststofffolie 17 anschließend ein- oder mehrfach gefaltet und schließlich verklebt.

Der Beutel 1 weist weiters eine Öffnungslasche 14 auf, die durch eine Perforation der Kunststofffolie 17 erzeugt wurde. Innenseitig in Bezug auf die Öffnungslasche 14 ist ein Wiederverschluss 15 an der Innenseite 19 der Kunststofffolie 17 angebracht. Der Wiederverschluss 15 deckt die Öffnungslasche 14 innenseitig vollständig ab. Der Wiederverschluss 15 ist durch einen Zipper (nicht im Detail dargestellt) gebildet.

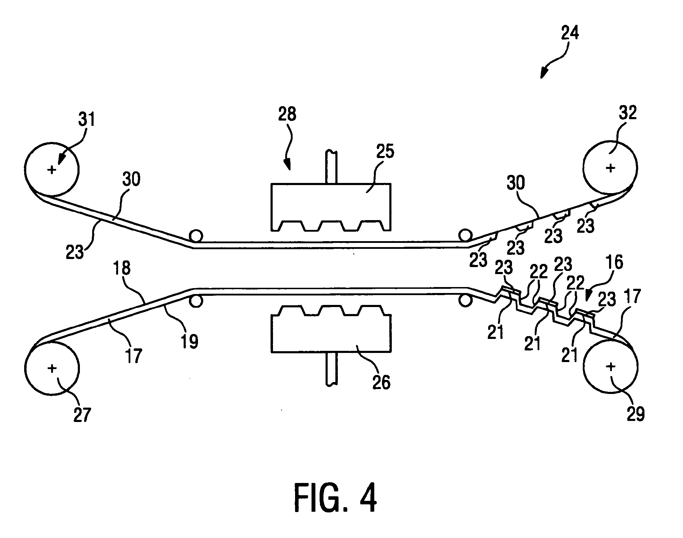

Der Beutel 1 weist ein Relief 16 auf. Das Relief 16 ist durch einen Prägevorgang an jenem Teil der Kunststofffolie 17 erzeugt, der bei dem fertig gestellten Beutel 1 den Vorderwandbereich 2 bildet. Dabei kommt die Kunststofffolie 14 zwischen zwei Prägewerkzeugen, nämlich einer Patrize 26 und einer Matrize 25 zu liegen und die beiden Prägewerkzeuge werden gegeneinander gepresst (siehe Details dazu in Fig. 4). Das in der Fig. 1 abgebildete Relief 16 - im vorliegenden Fall der Schriftzug "MONDI" - ragt plastisch aus dem ebenen Hintergrund der äußeren Fläche der Kunststofffolie 17 heraus.

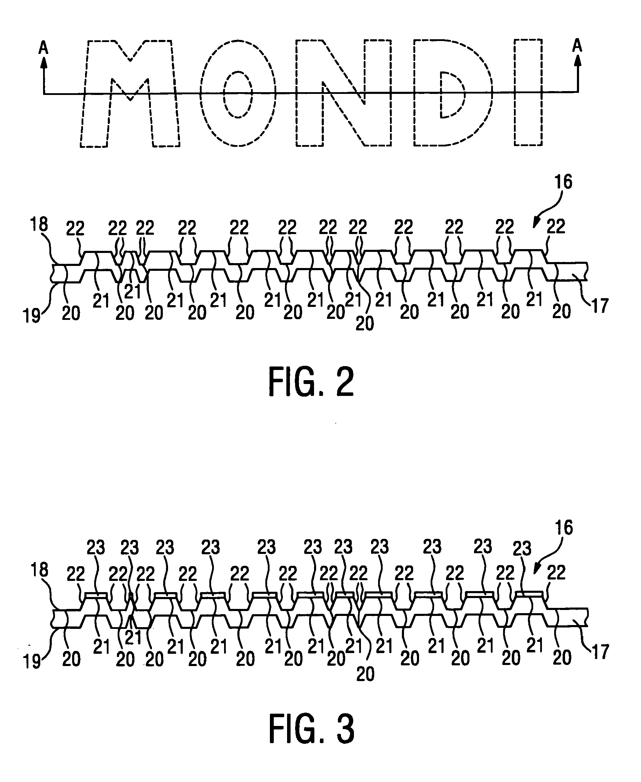

Die Struktur des Reliefs 16 entlang der Schnittlinie A-A ist in der Fig. 2 dargestellt. Zur Verdeutlichung, wie die Erhebungen in der Kunststofffolie 17 zustande gekommen sind, ist oberhalb der Schnittdarstellung der Schriftzug "MONDI" mit der in der Fig. 1 dargestellten Schnittlinie A-A abgebildet. In der Fig. 2 ist deutlich zu sehen, wie durch den Prägeprozess die Außenseite 18 und die Innenseite 19 verformt wird. Im Gegensatz zu nicht geprägten Bereichen erheben sich in geprägten Bereichen aus der sonst ebenen Fläche der Kunststofffolie 17 heraus. Auf der Außenseite 18 bilden sich somit erste Bereiche 20 aus, die in der Ebene der ursprünglichen Außenfläche der Folie 17 verlaufen. Dazwischen sind zweite Bereiche 21 vorhanden, die im Wesentlichen ebenfalls parallel zu der ursprünglichen Oberfläche der Kunststofffolie 17 verlaufen. Zwischen den ersten Bereichen 20 und den zweiten Bereichen 21 sind Flanken 22 ausgebildet. Die zweiten Bereiche 21 zusammen mit den Flanken 22 bilden das Relief 16.

Die Flanken 22 realisieren eine Diskontinuität in dem Reflektions- bzw. Absorptionsverhalten der Außenseite 18 der Kunststofffolie 17. Die Flanken 22 erleichtern also das automatische Erkennen der Konturen des Reliefs selbst bei ungünstigen Lichtverhältnissen, weil genau in diesen Bereichen das Licht anders reflektiert oder absorbiert wird, als im Vergleich zu einer Reflexion oder Absorption in den ersten oder zweiten Bereichen 20 bzw. 21. Die Flanken 22 bzw. Konturen des Reliefs 16 und letztendlich die daraus abzuleitende in dem Relief 16 kodierte Information lassen sich somit relativ einfach durch optische Differenzmessungen ermitteln. Dabei wird die Reflexion bzw. die Absorption von Licht an den Flanken 22 mit der Reflexion bzw. Absorption des Lichts an den umliegenden Bereichen verglichen. Daraus lassen sich Bilddaten generieren, welche die Kontur repräsentieren und einer weiteren Datenverarbeitung zugeführt werden.

In der Fig. 3 ist ein bevorzugtes Ausführungsbeispiel des Reliefs 16 abgebildet. Es weisen die zweiten Bereiche 21 an der Außenseite 18 eine Materialschicht 23 auf. Die Materialschicht 23 weist ein von den zweiten Bereichen 20 und den Flanken 22 unterschiedliches Reflektions- bzw. Absorptionsverhalten auf. Dies trägt insbesondere zur besseren automatischen Erkennbarkeit des Reliefs 16 bei. Im Vergleich zu der Ausbildung gemäß der Fig. 2 sind nun nicht mehr nur relativ schmale Flanken 22, sondern auch die relativ großen zweiten Bereiche 21 gut und zuverlässig von den ersten Bereichen 20 auf automatische Weise zu unterscheiden. Es wird also die automatische Erkennbarkeit des gesamten Reliefs 16 verbessert.

In der Fig. 4 ist stark schematisiert eine Herstellungsvorrichtung 24 zum Herstellen der mit dem Relief 16 versehenen Kunststofffolie 17 abgebildet. Mit ihrer Hilfe wird das in der Fig. 3 dargestellte Relief 16 in der Kunststofffolie 17 erzeugt. Die Vorrichtung 24 weist eine Matrize 25 und eine Patrize 26 auf. Die Kunststofffolie 17 wird von einer ersten Abwickelvorrichtung 27 abgewickelt und einem zwischen der Matrize 25 und der Patrize 26 gelegenen Prägebereich 28 zugeführt. Nach dem Prägevorgang wird die geprägte Kunststofffolie 17 auf einer ersten Aufwickelvorrichtung 29 zum Zweck der Speicherung für eine weitere Verarbeitung zu einem Beutel 1 aufgewickelt.

Die Materialschicht 23 ist auf einem Trägerband 30 aufgetragen und wird zusammen mit dem Trägerband 30 von einer zweiten Abwickelvorrichtung 31 abgewickelt und dem Prägebereich 25 zugeführt. Nach dem Prägevorgang verbleiben vereinzelte Bereiche der Materialschicht 23 auf dem Trägerband 30 und werden zusammen mit dem Trägerband 30 auf einer zweiten Aufwickelvorrichtung 32 aufgewickelt. Dazwischenliegende Bereiche der Materialschicht 23 werden durch den Prägevorgang auf die Außenseite 18 der Kunststofffolie 17 auf die zweiten Bereiche 21 aufgetragen.

Die Kunststofffolie 17 und das Trägerband 30 werden synchron zueinander bewegt und verharren während des Prägevorgangs in Ruhe.

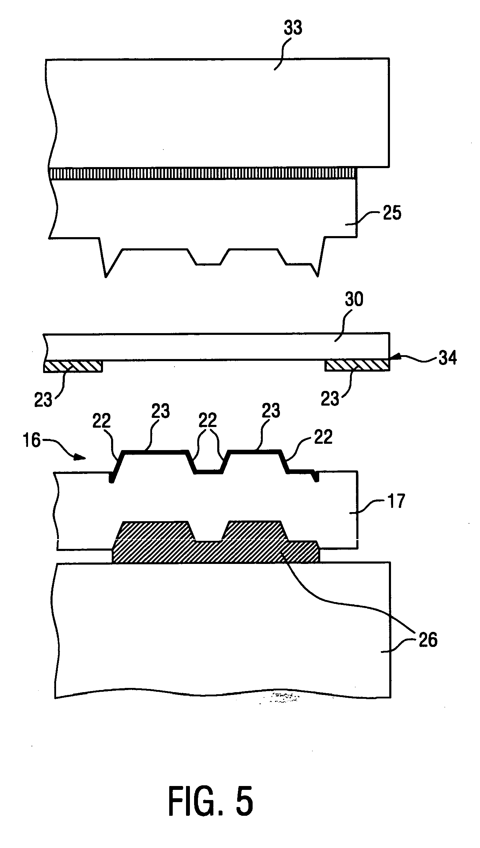

Der in der Fig. 5 dargestellte Ausschnitt des Prägebereichs 28 - eine Sektion des Querschnittes betrachtet in Bewegungsrichtung der Kunststofffolie 17 nach dem Zusammenpressen der Matrize 25 und der Patrize 26 - weist im Unterschied zu dem in der Fig. 4 dargestellten Prägebereich 28 eine Heizeinrichtung 33 an der Rückseite der Matrize 25 auf. Die Heizeinrichtung 33 wird elektrisch betrieben und die Herstellungsvorrichtung 24 weist entsprechende Steuer- und / oder Versorgungsstufen (nicht dargestellt) auf, mit deren Hilfe die Heizleistung der Heizeinrichtung 33 gesteuert wird. Die Heizeinrichtung 33 erwärmt die Matrize 25, so dass die Materialschicht 23 punkt- und / oder bereichsgenau von der Trägerbahn 30 auf die entsprechenden Bereiche des Reliefs 16 übertragen wird. Um diesen Transferprozess des Materials 23 auf die Kunststofffolie 17 noch präziser zu steuern, kann auch die Form der Heizeinrichtung 33 der Form des zu erzeugenden Reliefs 16 - letztendlich den Erhebungen und / oder Vertiefungen der Matrize 25 folgend angepasst sein und auf den Bereich der Erhebungen und / oder Vertiefungen beschränkt sein. Im vorliegenden Fall kommt eine Trägerbahn 30 zum Einsatz, bei der zwischen der Materialschicht 23 und der Trägerbahn 30 ein Schmelzkleber 34 angeordnet ist, der durch die Wärmeeinwirkung verursacht durch die Heizeinrichtung 33 schmilzt, so dass die Materialschicht 23 bei dem Zusammenpressen der Matrize 25 und der Patrize 26 genauer und leichter auf die Kunststofffolie 17 übertragen wird, so wie dies in der Fig. 5 dargestellt ist.

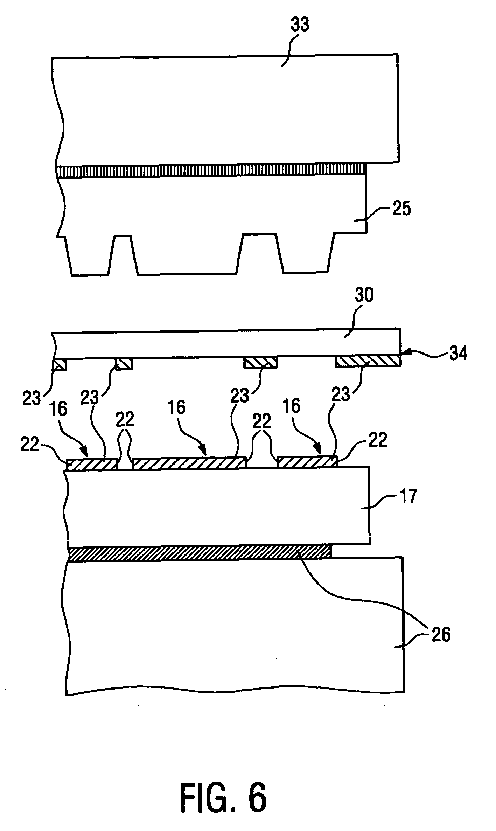

In der Figur 6 ist auf analoge Weise wie in der Figur 5 ein Ausschnitt des Prägebereiches 28 dargestellt, wobei im vorliegenden Fall eine gemäß dem zu erzeugenden Relief 16 ausgebildete Matrize 25 zum Einsatz kommt. Die Patrize 26 ist im vorliegenden Fall eben ausgebildet. Bei dem Zusammenpressen der Matrize 25 und der Patrize 26 wird die Materialschicht 23 selektiv an den Stellen der Erhebung der Matrize 25 auf die Kunststofffolie 17 transferiert. Auch im vorliegenden Fall kommt eine Trägerbahn 30 mit Schmelzkleber 34 zwischen ihr und der Materialschicht 23 zum Einsatz.

Es sei abschließend noch einmal darauf hingewiesen, dass es sich bei dem vorhergehend detailliert beschriebenen Beutel sowie bei der dargestellten Vorrichtung lediglich um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Auch wenn nur ebene Reliefe dargestellt wurden, kann das Relief auch eine spitze oder kuppel- oder domartige Form haben. Auch können im Zusammenhang mit einem Ausführungsbeispiel offenbarte Merkmale bei anderen Ausführungsbeispielen in Kombination mit dort offenbarten Merkmalen zur Anwendung kommen. Auch können die Proportionen der dargestellten Merkmale variieren, ohne dass von dem Konzept der Erfindung abgewichen wird. Bezugszeichen in den Ansprüchen sind nicht als Einschränkung anzusehen.

### BEZUGSZEICHENLISTE

- 1: Beutel
- 2: Vorderwandbereich
- 3: Rückwandbereich
- 4: erster Seitenwandbereich
- 5: zweiter Seitenwandbereich
- 6: erste Seitenfalte
- 7: zweite Seitenfalte
- 8: erste Längssiegelnaht
- 9: zweite Längssiegelnaht
- 10: dritte Längssiegelnaht
- 11: vierte Längssiegelnaht
- 12: Bodenbereich
- 13: Quersiegelnaht
- 14: Öffnungslasche
- 15: Wiederverschluss
- 16: Relief
- 17: Kunststofffolie
- 18: Außenseite
- 19: Innenseite
- 20: erster Bereich
- 21: zweiter Bereich
- 22: Flanken
- 23: Materialschicht
- 24: Herstellungsvorrichtung
- 25: Matrize
- 26: Patrize
- 27: erste Abwickelvorrichtung
- 28: Prägebereich
- 29: erste Aufwickelvorrichtung
- 30: Trägerband
- 31: zweite Abwickelvorrichtung
- 32: zweite Aufwickelvorrichtung
- 33: Heizeinrichtung
- 34: Schmelzkleber

## Patentansprüche

1. Verfahren zur Herstellung einer Kunststofffolie (17) für eine Beutelwand eines Beutels (1), welches Verfahren die nachfolgend angeführten Verfahrensschritte aufweist, nämlich:
- Zuführen der Kunststofffolie (17) zu einer Prägestation, wobei die Prägestation eine Matrize (25) und eine Patrize (26) aufweist, und
- Zuführen eines Materials auf einer Trägerbahn (30) zu der Prägestation, wobei das Material auf jener der Kunststofffolie (17) zugewandten Seite der Trägerbahn (30) angebracht ist und an jener Seite der Kunststofffolie (17) befördert wird, die bei dem fertigen Beutel (1) nach außen weist, und
- Zusammenpressen der Kunststofffolie (17) und der Trägerbahn (30) zwischen der Matrize (25) und der Patrize (26) zwecks Erzeugung eines Reliefs (16).

2. Verfahren nach Anspruch 1, wobei die Prägestation eine Heizeinrichtung (33) aufweist, die mit der Matrize (25) und / oder der Patrize (26) zusammenwirkt und wobei zwischen der Trägerbahn (30) und dem auf der Trägerbahn (30) zugeführten Material ein Schmelzkleber (34) angeordnet ist, wobei
- bei dem Verfahrenschritt des Zusammenpressens der Schmelzkleber (34) durch Wärmeeinwirkung erzeugt durch die Heizeinrichtung (33) geschmolzen wird und das auf der Trägerbahn (30) befindliche Material auf die Kunststofffolie (17) im Bereich des Reliefs (16) übertragen wird.

3. Verfahren nach einem der Ansprüche 1 bis 2, wobei
- die Matrize (25) und die Patrize (26) die Form des Reliefs (16) aufweisen, oder
- nur die Matrize (25) die Form des Reliefs (16) oder eine dazu komplementäre Form aufweist und die Patrize (26) eben ausgebildet ist.

4. Verfahren nach einem der Ansprüche 1 bis 3, wobei nach dem Erzeugen des Reliefs (16) die Matrize (25) und die Patrize (26) voneinander entfernt werden und sowohl die Kunststofffolie (17) mit dem erzeugten Relief (16) als auch die Trägerbahn (30) weiterbewegt werden.

5. Verfahren zur Herstellung eines Beutels aus einer Kunststofffolie (17),
- wobei zunächst in einer ebenen Bahn der Kunststofffolie (17) in einer Prägestation mit Hilfe einer Matrize (25) und einer Patrize (26) ein Relief (16) in vordefinierten Abständen entlang der Bahn der Kunststofffolie (17) erzeugt wird, aufweisend ein
- Zuführen eines Materials auf einer Trägerbahn (30) zu der Prägestation, wobei das Material auf jener der Kunststofffolie (17) zugewandten Seite der Trägerbahn (30) angebracht ist und an jener Seite der Kunststofffolie (17) befördert wird, die bei dem fertigen Beutel (1) nach außen weist, und
- Zusammenpressen der Kunststofffolie (17) und der Trägerbahn (30) zwischen der Matrize (25) und der Patrize (26) zwecks Erzeugung eines Reliefs (16), und
- wobei nachfolgend an das Erzeugen des Reliefs (16) in der ebenen Bahn der Kunststofffolie (17) die Bahn zu einem Beutel (1) derart verarbeitet wird, dass eine Beutelwand des Beutels (1) das Relief (16) aufweist.

6. Verfahren nach Anspruch 5, wobei das Verarbeiten der ebenen Bahn der Kunststofffolie (17) ein Segmentieren umfasst und durch die Segmentierung erhaltene individuelle Foliensegmente der Bahn durch Falten und Versiegeln zu dem Beutel (1) geformt werden.

7. Verfahren nach Anspruch 5, wobei das Verarbeiten der ebenen Bahn der Kunststofffolie (17) ein Falten und Versiegeln zwecks Bildung einer Schlauchform umfasst, die nachfolgend segmentiert zu dem fertigen Beutel (1) durch weitere Formung und Versiegelung weiter verarbeit wird.

## Claims

1. A method for producing a plastic film (17) for a bag wall of a bag (1), said method comprises the below-mentioned method steps, namely:
- feeding the plastic film (17) to an embossing station, wherein the embossing station encompasses a female part (25) and a male part (26), and
- feeding a material to the embossing station on a support web (30), wherein the material is applied to that side of the support web (30), which faces the plastic film (17), and is conveyed on that side of the plastic film (17), which faces outwards in the case of the finished bag (1), and
- compressing the plastic film (17) and the support web (30) between the female part (25) and the male part (26) for the purpose of creating a relief (16).

2. The method according to claim 1, wherein the embossing station comprises a heating device (33), which interacts with the female part (25) and/or the male part (26), and wherein a hotmelt adhesive (34) is arranged between the support web (30) and the material, which is fed on the support web (30), wherein
- in step of compressing, the hotmelt adhesive (34) is melted under the influence of heat created by the heating device (33), and the material located on the support web (30) is transferred to the plastic film (17) in the area of the relief (16).

3. The method according to one of claims 1 to 2, wherein
- the female part (25) and the male part (26) comprise the shape of the relief (16), or
- only the female part (25) comprises the shape of the relief (16) or a shape, which is complementary thereto, and the male part (26) is embodied so as to be flat.

4. The method according to one of claims 1 to 3, wherein the female part (25) and the male part (26) are removed from one another after creation of the relief (16) and the plastic film (17) with the created relief (16) as well as the support web (30) are moved further.

5. A method for producing a bag of a plastic film (17),
- wherein a relief (16) is initially created at predefined distances along the web of the plastic film (17) in a flat web of the plastic film (17) in an embossing station with the help of a female part (25) and a male part (26), comprising a
- feeding of a material on a support web (30) to an embossing station, wherein the material is applied to that side of the support web (30), which faces the plastic film (17), and is conveyed on that side of the plastic film (17), which faces outwards in the case of the finished bag (1), and
- compressing the plastic film (17) and the support web (30) between the female part (25) and the male part (26) for the purpose of creating a relief (16) and
- wherein, following the creation of the relief (16) in the flat web of the plastic film (17), the web is processed to form a bag (1) such that a bag wall of the bag (1) encompasses the relief (16).

6. The method according to claim 5, wherein the processing of the flat web of the plastic film (17) comprises a segmenting and individual film segments of the web, which are obtained by means of the segmenting, are formed into the bag (1) by folding and sealing.

7. The method according to claim 5, wherein the processing of the flat web of the plastic film (17) comprises a folding and sealing for forming a tubular shape, which, segmented subsequently, is further processed into the finished bag (1) by means of further shaping and sealing.

## Revendications

1. Procédé de fabrication d'un film en matière plastique (17) pour la paroi de sachet d'un sachet (1), lequel procédé comporte les étapes de procédé mentionnées ci-dessous, à savoir :
- amenage du film en matière plastique (17) vers un poste de gaufrage, la station de gaufrage comportant une matrice (25) et un poinçon (26) et
- amenage d'une matière sur une bande porteuse (30) vers le poste de gaufrage, la matière étant appliquée sur le côté de la bande porteuse (30) qui fait face au film en matière plastique (17) et étant transportée sur le côté du film en matière plastique (17) qui sur le sachet (1) fini est dirigé vers l'extérieur et
- compression du film en matière plastique (17) et de la bande porteuse (30) entre la matrice (25) et le poinçon (26) pour créer un relief (16).

2. Procédé selon la revendication 1, le poste de gaufrage comportant un dispositif de chauffage (33) qui coopère avec la matrice (25) et / ou avec le poinçon (26) et entre la bande porteuse (30) et la matière amenée sur la bande porteuse (30) étant disposée une colle fusible (34)
- lors de l'étape de procédé de la compression, la colle fusible (34) étant mise en fusion sous l'action d'une chaleur créée par le dispositif de chauffage (33) et la matière se trouvant sur la bande porteuse (30) étant transférée sur le film en matière plastique (17) dans la zone du relief (16).

3. Procédé selon l'une quelconque des revendications 1 à 2,
- la matrice (25) et le poinçon (26) présentant la forme du relief (16) ou
- seule la matrice (25) présentant la forme du relief (16) ou une forme complémentaire de ce dernier et le poinçon (26) étant conçu en version plane.

4. Procédé selon l'une quelconque des revendications 1 à 3, après la création du relief (16), la matrice (25) et le poinçon (26) étant éloignés l'une de l'autre et aussi bien le film en matière plastique (17) avec le relief créé (16) que la bande porteuse (30) étant déplacés plus loin.

5. Procédé de fabrication d'un sachet dans un film en matière plastique (17),
- dans un premier temps, dans une bande plane du film en matière plastique (17), dans un poste de gaufrage, à l'aide d'une matrice (25) et d'un poinçon (26), un relief (16) étant créé à des distances prédéfinies le long de la bande du film en matière plastique (17), comportant un
- amenage d'une matière sur une bande porteuse (30) vers le poste de gaufrage, la matière étant appliquée sur le côté de la bande porteuse (30) qui fait face au film en matière plastique (17) et étant transportée sur le côté du film en matière plastique (17) qui sur le sachet (1) fini est dirigé vers l'extérieur et
- compression du film en matière plastique (17) et de la bande porteuse (30) entre la matrice (25) et le poinçon (26) pour la création d'un relief (16) et
- suite à la création du relief (16) dans la bande plane du film en matière plastique (17), la bande étant retransformée en un sachet (1) de telle sorte qu'une paroi de sachet du sachet (1) présente le relief (16).

6. Procédé selon la revendication 5, la transformation de la bande plane du film en matière plastique (17) comprenant une segmentation et des segments individuels de film obtenus par la segmentation étant façonnés par pliage et par scellement pour obtenir le sachet (1).

7. Procédé selon la revendication 5, la transformation de la bande plane du film en matière plastique (17) comprenant un pliage et un scellement pour créer une forme tubulaire, qui en étant ensuite segmentée est retransformée par façonnage et scellement ultérieurs pour obtenir le sachet (1) fini.
